# FASCICULE DE BREVET EUROPEEN

(11) **EP 3 880 432 B1**
(45) Date de publication et mention de la délivrance du brevet: **31.08.2022**
(21) Numéro de dépôt: 19835438.3
(22) Date de dépôt: 30.10.2019
(51) Int. Cl.: B29C 49/48, B29C 49/06, B29L 31/00

(54) **FOND DE MOULE POUR MOULE DE FABRICATION DE RECIPIENTS EN MATIERE PLASTIQUE**
FORMUNTERTEIL FÜR EINE FORM ZUR HERSTELLUNG VON THERMOPLASTISCHEN BEHÄLTERN
MOULD BOTTOM FOR A MOULD FOR MANUFACTURING THERMOPLASTIC CONTAINERS

(30) Priorité: 13.11.2018 FR 1871494
(43) Date de publication de la demande: 22.09.2021
(73) Titulaire: Sidel Participations, 76930 Octeville-sur-Mer (FR)
(72) Inventeur: SANDRINI, Maxime, 76930 Octeville-Sur-Mer (FR); BOUKOBZA, Michel, 76930 Octeville-Sur-Mer (FR)
(74) Mandataire: Sidel Group
(86) Numéro de dépôt international: PCT/FR2019/052580
(87) Numéro de publication internationale: WO 2020/099755

(56) Documents cités:
- US-A1- 2006 170 138
- US-A1- 2016 325 483
- US-A1- 2016 332 356

## Description

Le domaine de l'invention est celui de la conception et de la fabrication de récipients en matière plastique à partir d'ébauches, par soufflage ou étirage soufflage dans un moule à l'empreinte d'un modèle de récipient à former.

Plus précisément, l'invention concerne un fond de moule monobloc dont le refroidissement est amélioré par rapport à l'art antérieur.

Le terme « ébauche » désigne non seulement une préforme (ordinairement obtenue par injection), mais également un récipient intermédiaire ayant subi une opération préalable de soufflage à partir d'une préforme.

Un moule comprend d'ordinaire plusieurs éléments ayant chacun une surface de moulage à l'empreinte d'une partie au moins du récipient. Ainsi, un moule destiné au formage de récipients comprend une paroi latérale à l'empreinte d'un corps et d'une épaule du récipient, généralement divisée en deux demi-moules mutuellement articulés pour permettre l'introduction d'une ébauche dans le moule, et un fond de moule à l'empreinte d'un fond du récipient, généralement disposé en partie basse du moule. Ce fond de moule est positionné dans une ouverture ménagée entre les demi-moules à l'opposé de l'épaule et est normalement mobile entre une position basse dans laquelle il permet de mettre en place les ébauches et de décharger les récipients et une position haute pour le soufflage des récipients. Pour certains récipients ayant des formes locales particulières (par exemple des excroissances ou des réserves en creux formant poignée), le moule peut en outre comprendre des inserts mobiles à l'empreinte de ces formes.

Les moules sont généralement régulés thermiquement de façon à les maintenir à une température stable permettant soit de refroidir les récipients en fin de formage (cas général), soit, dans certains cas, au contraire, de les chauffer (cas des récipients destinés à être remplis d'un contenu chaud - on parle alors de thermofixation, ou « heat setting » en anglais).

Dans les deux cas, une technique bien connue consiste à faire circuler dans le moule un fluide (sous forme gazeuse ou liquide, en général de l'eau ou de l'huile), par des circuits fluidiques partiellement formés dans les éléments de moule (demi-moules, fond de moule, inserts éventuels, supports). Pour un refroidissement, le fluide est introduit dans le circuit fluidique à température relativement faible, typiquement de l'ordre de 10°C. Pour une chauffe, le fluide est introduit dans les circuits fluidiques à température relativement élevée, typiquement de l'ordre de 140°C.

On comprend aisément que la régulation thermique est d'autant plus efficace que les surfaces d'échange (définies par le circuit fluidique) entre le fluide et la matière du récipient sont importantes.

Un objectif courant, pour les fabricants de moules, est donc de maximiser les surfaces d'échange définies par le circuit fluidique. Plus précisément, pour des raisons de rationalisation de la fabrication des moules et de limitation de la perte de matière, l'objectif est de maximiser le ratio surface/volume des circuits fluidiques. Mais cet objectif se heurte à plusieurs limitations, notamment :
- les contraintes d'usinage (liées aux techniques employées :
   moulage, tournage, fraisage, électroérosion, etc.) ;
- les tolérances de fabrication liées à la nécessaire étanchéité des circuits fluidiques aux interfaces entre les différentes pièces composant les éléments de moule ;
- la tenue mécanique des moules (que l'on a intérêt à maximiser), la consommation de fluide (que l'on a intérêt à minimiser),
- les contraintes d'encombrement, l'environnement d'un moule de soufflage étant particulièrement encombré.

Le fond de moule est un bon concentré des problématiques nées de la régulation thermique, notamment pour les raisons suivantes :
- la forme de son empreinte est généralement complexe ;
- son volume est restreint,
- il est souvent indépendant des demi-moules (ce qui implique un circuit fluidique indépendant avec ses propres conduits d'alimentation et d'évacuation, raccordés à des flexibles).

De manière connue, un fond de moule est équipé d'un circuit fluidique usiné aussi près que possible de la surface interne du moule qui est épousée par la matière plastique, de façon à permettre une bonne efficacité du transfert thermique, c'est-à-dire du refroidissement ou de la chauffe.

Pour cela, une technique consistant à percer des canaux transversaux dans le fond (qu'il faut ensuite raccorder) peut convenir lorsque la surface d'empreinte est plate. En revanche, dès lors que cette surface interne est en relief, il n'est plus possible d'approcher les canaux au plus près de la surface interne, au risque de déboucher sur celle-ci. Au mieux, on peut, en perçant les canaux à la fois obliquement et radialement, suivre grossièrement (et seulement localement) le relief, comme illustré par exemple dans les documents de brevets américains publiés sous les numéros US 5971 740 et US 5762981.

Toutefois, cette technique ne permet pas de réaliser des échanges thermiques homogènes, les parties du fond du récipient situées à l'aplomb des canaux bénéficiant d'un meilleur refroidissement (ou inversement un meilleur réchauffement) que les parties qui sont décalées angulairement des canaux.

Une autre technique, destinée à améliorer l'efficacité (et plus précisément l'homogénéité) des échanges thermiques, consiste à pratiquer dans le fond de moule, par fraisage, une rainure unique ayant des portions circulaires concentriques reliées par des portions droites radiales pour former, grossièrement, un canal unique en forme de serpentin continu dans lequel le fluide entre par une ouverture centrale pour en sortir par une ouverture périphérique.

Une telle architecture, présentée dans le document de brevet publié sous le numéro US 7 025584, qui prévoit en outre de rapporter un plateau diviseur muni de pions en saillie destinées à former des chicanes dans le canal, n'est cependant pas non plus sans défaut.

Premièrement, dans le cas d'une surface de moulage dépourvue de symétrie de révolution, la forme en serpentin du canal ne résout pas le problème du défaut d'homogénéité de l'échange thermique. Typiquement, dans un fond de moule à l'empreinte d'un fond pétaloïde, dont le relief est particulièrement torturé, les reliefs correspondant aux pieds, plus proches du canal, bénéficient immanquablement d'un meilleur échange thermique que les reliefs correspondant aux vallées, relativement plus éloignées du canal.

Deuxièmement, la réalisation en serpentin du canal (au lieu d'une série de canaux radiaux) induit une diminution progressive de la capacité calorifique du fluide le long du canal. En effet, les zones dont la distance (mesurée en abscisse curviligne le long du canal) à l'ouverture centrale est faible offrent une meilleure capacité d'échange thermique que les zones dont la distance à l'ouverture centrale est relativement plus importante. Cette géométrie ne pose pas de problème dans la zone centrale du fond, qui doit en général bénéficier du maximum d'échange thermique, qu'il s'agisse de le refroidir, comme dans le cas d'un récipient ordinaire destiné à de l'eau plate, ou au contraire de le réchauffer, comme dans le cas d'un récipient thermofixé.

Pour pallier les inconvénients des fonds de moule de l'art antérieur et notamment améliorer l'échange thermique (plus homogène), ainsi que la fréquence et le coût de la maintenance, de nouveaux fonds de moules ont été développés.

Cela a notamment été rendu possible par la mise au point de nouvelles techniques de fabrication telle que la fabrication additive, autrement appelée fabrication par impression 3D.

Un fond de moule issu d'un tel procédé de fabrication est présenté dans le document WO2015092196. Ce fond de moule comprend :
- une paroi de moulage ayant une surface de moulage en relief à l'empreinte d'au moins une partie d'un fond de récipient,
- une cavité destinée à recevoir un fluide caloporteur, incluse dans le fond de moule, cette cavité étant délimitée par une enveloppe surfacique intégralement définie par le fond de moule et incluant :
- une surface interne de la paroi de moulage, opposée à la surface de moulage et épousant le relief de celle-ci ;
- une surface arrière en regard de la surface interne,
- au moins une ouverture d'entrée et au moins une ouverture de sortie pour la circulation du fluide caloporteur dans la cavité,
- un maillage de poteaux s'étendant sur au moins une portion de la cavité entre la surface interne de la paroi de moulage et la surface arrière.

Les poteaux du maillage sont avantageusement disposés selon un motif de croisillons, c'est-à-dire, qu'ils sont alternativement inclinés dans un premier sens ou dans un deuxième sens opposé au premier sens.

Outre l'échange thermique entre le fluide et le fond de moule, la conception de ce fond de moule offre une bonne tenue mécanique lors du soufflage. En effet, lors du soufflage, de l'air à une pression entre 20 et 40 bars est injecté dans l'ébauche pour plaquer sa matière contre la paroi de moulage. Le maillage de poteaux permet donc d'éviter que les efforts de pression ne fassent s'affaisser la paroi de moulage dans la cavité, ce qui provoquerait alors une interruption de la circulation du fluide destiné à refroidir ou chauffer le moule.

Toutefois, ce fond de moule n'est pas sans inconvénients.

En effet, la présence du maillage de poteaux crée une perturbation dans la circulation du fluide. Par leur disposition en motif de croisillons dans la cavité, les poteaux limitent l'échange thermique, bien que celui-ci reste largement supérieur et de meilleure qualité que celui des canalisations de l'art antérieur.

Par ailleurs, en termes de fabrication, même si la fabrication additive permet de réaliser des formes libres, une des contraintes réside en la fusion de la matière solidifiée sans support sur un lit de poudre. L'absence ou le manque de matière de support fusionnée génère des phénomènes de surfusions de matière, qui amène à un état de surface grossier de certaines zones de la cavité et peut nuire à la circulation du fluide dans la cavité et, en conséquence, à la qualité des échanges thermiques. Ce phénomène est d'autant plus gênant lorsqu'il survient sur une surface dite négative, c'est-à-dire une surface interne de la cavité opposée à une surface de moulage, lorsque ladite surface négative forme un angle inférieur à 45° avec un plan de pose du fond de moule.

Il convient de noter que les motifs en croisillons, pour former le maillage, sont assez difficiles à réaliser, mais que leur présence permet de réduire les phénomènes de surfusion.

Cela est particulièrement vérifié lorsque le fond de moule est réalisé par frittage.

L'invention a notamment pour objectif de palier les inconvénients de l'art antérieur.

Plus précisément, l'invention a pour objectif de proposer un fond de moule favorisant la circulation du fluide dans la cavité de sorte à permettre un meilleur échange thermique entre le fluide et le moule, ce qui permet d'obtenir une meilleure qualité des récipients fabriqués.

L'invention a également pour objectif de fournir un tel fond de moule qui soit simple de fabrication.

L'invention a en outre pour objectif de fournir un tel fond de moule qui ne demande qu'une faible maintenance.

Ces objectifs, ainsi que d'autres qui apparaîtront par la suite, sont atteints grâce à l'invention qui a pour objet un fond de moule monobloc destiné à un moule pour la fabrication de récipients par soufflage ou étirage soufflage à partir de préformes en matière plastique, le fond de moule comprenant :
- une paroi de moulage ayant une surface de moulage en relief à l'empreinte d'au moins une partie d'un fond de récipient,
- une cavité destinée à recevoir un fluide caloporteur, incluse dans le fond de moule, cette cavité étant délimitée par une enveloppe surfacique intégralement définie par le fond de moule et incluant, d'une part, une surface interne de la paroi de moulage, opposée à la surface de moulage et épousant le relief de celle-ci, d'autre part, une surface arrière en regard de la surface interne,
- au moins une ouverture d'entrée et au moins une ouverture de sortie pour la circulation du fluide caloporteur dans la cavité,
- un maillage de poteaux s'étendant sur au moins une portion de la cavité entre la surface interne de la paroi de moulage et la surface arrière, caractérisé en ce que chaque poteau définit, avec un axe longitudinal du fond de moule, un angle compris entre 0° et 45°, etest relié à la surface interne de la paroi de moulage par un premier évasement de matière depuis le poteau vers la surface interne de la paroi de moulage,
   et en ce qu'une première section entre la liaison du premier évasement de matière avec la surface interne de la paroi de moulage définit avec une deuxième section du poteau, avant le premier évasement de matière, un rapport compris entre 10 et 15.

Grâce au positionnement des poteaux (c'est-à-dire à leur verticalité), la fabrication du fond de moule est simplifiée et améliorée.

En effet, lors de la fabrication du moule, notamment par frittage, chaque nouvelle zone de poudre à fusionner repose en majorité sur une zone de matière déjà solidifiée. A titre indicatif, le recouvrement entre la zone déjà solidifiée et la zone de poudre à fusionner est comprise entre 80% et 100%. Cela évite notamment les risques de surfusion et permet de garantir un bon état de surface à l'intérieur de la cavité, au bénéfice de la circulation du fluide et donc de l'échange thermique.

Cela est amplifié par la présente des premiers évasements de matière pour la formation de la paroi de moulage.

Par ailleurs, les premiers évasements de matière permettent une diffusion plus rapide et directe des calories de la paroi de moulage vers la cavité, ce qui facilite l'échange thermique avec le fluide.

En outre, les poteaux permettent de créer une turbulence maîtrisée dans la circulation du fluide dans la cavité, cette turbulence favorisant l'échange thermique entre le fond de moule et le fluide.

Avantageusement, les poteaux sont disposés le long de cercles concentriques par rapport à l'axe du fond de moule.

Ce positionnement permet à la fois de maîtriser la turbulence dans la circulation du fluide et la tenue mécanique du fond de moule, notamment la résistance de la paroi de moulage lors du soufflage du récipient.

De préférence, les poteaux d'un premier cercle sont agencés en quinconce par rapport aux poteaux d'un deuxième cercle immédiatement adjacent.

L'agencement en quinconce crée des déviations dans le sens de la circulation du fluide. Ainsi, le fluide est ralenti de manière contrôlée de sorte qu'il puisse échanger les calories avec la paroi de moulage et les poteaux, en acquérant des calories (dans le cas d'un refroidissement du fond de moule) ou en en perdant (dans le cas d'une chauffe du fond de moule).

Selon un mode de réalisation avantageux, le maillage s'étend dans un diamètre compris entre 75% et 100% d'un diamètre d'assise des récipients à former.

Une telle couverture du maillage favorise la tenue mécanique et l'échange thermique dans une partie du fond de moule qui représente la plus grosse concentration de contraintes, notamment en termes d'efforts mécaniques et d'échanges thermiques.

Avantageusement, le maillage s'étend uniquement dans une portion de la cavité formant un angle, avec un plan de pose des récipients à former, inférieur à 45°.

Au-delà de cette limite, la tenue mécanique est assurée par la paroi de moulage et les autres parois du fond de moule. Des cloisons peuvent alors être positionnées dans la cavité pour délimiter des conduits de circulation du fluide et favoriser l'extraction du fluide hors du fond de moule.

Selon un mode de réalisation préférentiel, le maillage de poteaux comprend un nombre de poteaux compris entre 10 et 60 poteaux par cm².

De préférence, le fond de moule est réalisé par frittage à partir d'une poudre métallique, lui permettant de garantir une bonne tenue mécanique ; le frittage est réalisé à partir d'une poudre comprenant un mélange de chrome et de cobalt représentant au moins 80 % en masse de la poudre.

Couplé à une section appropriée, un tel nombre de poteaux permet de réaliser une bonne tenue mécanique tout en garantissant une turbulence adéquate pour faciliter et augmenter la qualité de l'échange thermique entre le fluide et le fond de moule.

De préférence, les poteaux présentent une section ovale, dont la plus grande longueur s'étend selon une direction de la circulation du fluide caloporteur dans la cavité.

La section ovale des poteaux permet de limiter l'impact des poteaux sur la circulation du fluide, leurs seuls orientation et positionnement permettant de créer la turbulence souhaitée dans la circulation du fluide pour augmenter la qualité de l'échange thermique entre le fluide et le fond de moule.

D'autres caractéristiques et avantages de l'invention apparaîtront plus clairement à la lecture de la description suivante d'un mode de réalisation préférentiel de l'invention, donné à titre d'exemple illustratif et non limitatif, à la lueur des dessins annexés parmi lesquels :
[Fig. 1] est une vue en perspective de dessus d'un fond de moule selon l'invention, présentant une cavité de passage d'un fluide ;
[Fig. 2] est une vue en coupe transversale du fond de moule selon l'invention, cette vue comprenant un premier médaillon de détail à échelle agrandie montrant un collecteur du fluide permettant l'évacuation du fluide hors du fond de moule, et un deuxième médaillon de détail à échelle agrandie montrant une entrée du fluide dans le fond de moule ;
[Fig. 3] est une vue schématique de détail en section, montrant un poteau situé dans la cavité du fond de moule ;
[Fig. 4] est une vue schématique montrant l'agencement des poteaux dans la cavité du fond de moule.

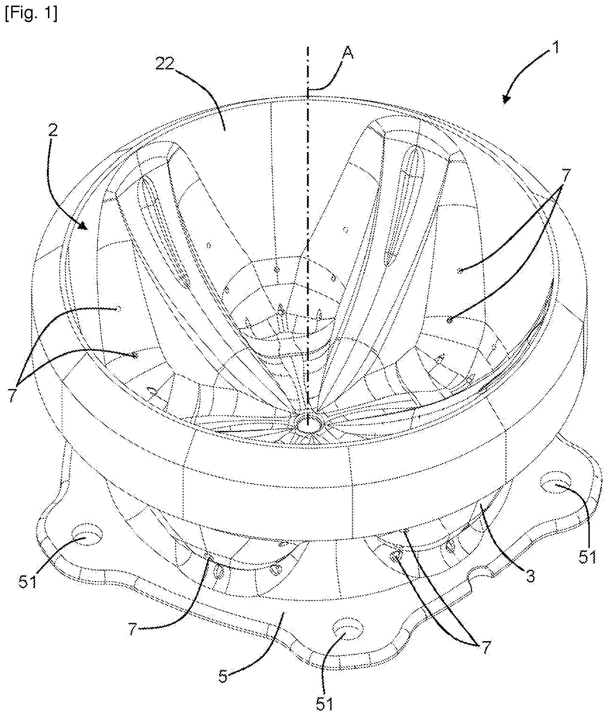

La figure 1 illustre un fond 1 de moule monobloc destiné à un moule pour la fabrication de récipients par soufflage ou étirage-soufflage à partir de préformes en matière plastique.

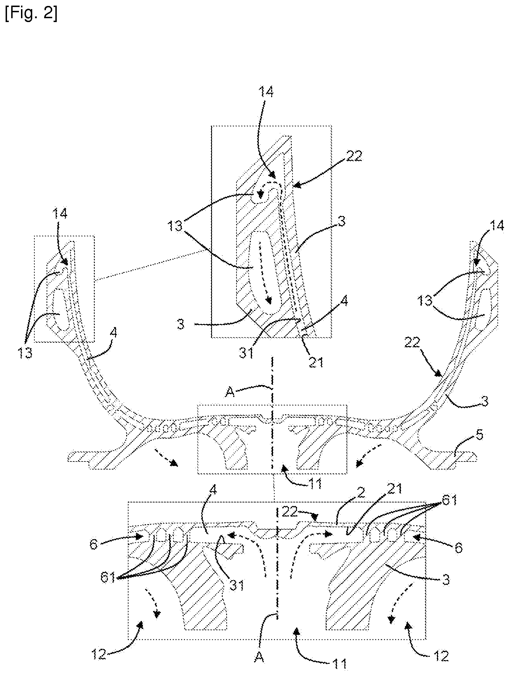

Tel que cela est illustré sur la figure 1 et sur la figure 2, le fond 1 de moule comprend :
- une paroi de moulage 2 ;
- une paroi externe 3 du fond 1 de moule ;
- une cavité 4 formée entre la paroi de moulage 2 et la paroi externe 3 du fond 1 de moule.

Le fond 1 de moule présente en outre un socle 5 pourvu de perçages 51, ce socle 5 s'étendant depuis la paroi externe 3 du fond 1 de moule vers l'extérieur de celui-ci. Les perçages 51 permettent notamment de fixer le fond 1 de moule à des moyens de mise en mouvement du fond 1 de moule, par exemple un vérin, pour permettre de rendre mobile le fond 1 de moule par rapport à un corps de moule, en déplaçant le fond 1 de moule le long d'un axe longitudinal A du fond 1 de moule, afin d'autoriser, dans une première position éloignée du reste du moule, la mise en place les ébauches et le déchargement des récipients et, dans une seconde position rapprochée du reste du moule, le soufflage des récipients..

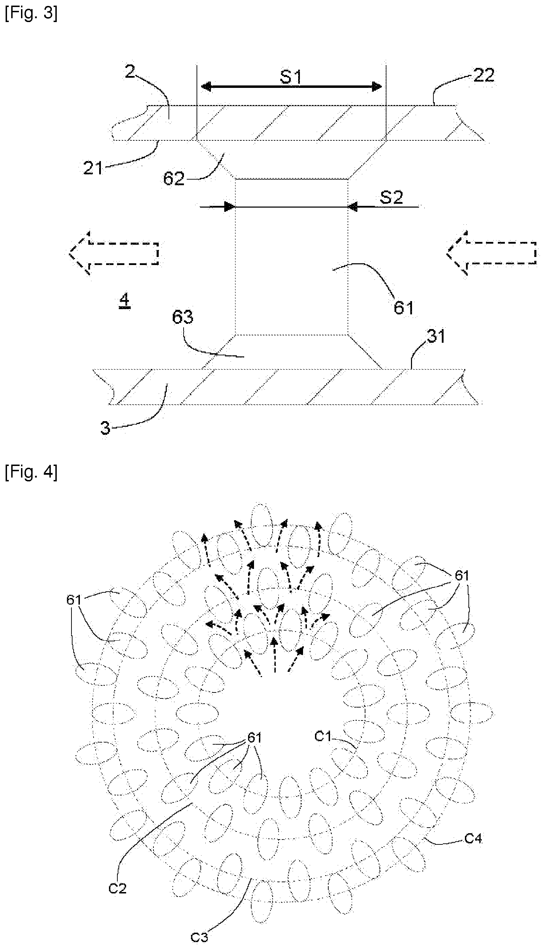

Tel que cela est illustré sur les figures 2 et 3, la cavité 4 est plus précisément formée entre une surface interne 21 de la paroi de moulage 2 et une surface arrière 31 de la paroi externe 3 du fond 1 de moule.

La cavité 4, comme décrit ci-après, est destinée à recevoir un fluide caloporteur pour permettre une évacuation des calories lors de la fabrication des récipients en matière plastique.

La cavité 4 peut également recevoir un fluide chaud destiné à réchauffer la paroi de moulage 2 du fond 1 de moule.

La cavité 4 est délimitée par une enveloppe surfacique intégralement définie par le fond 1 de moule, qui inclut :
- la surface interne 21 de la paroi de moulage 2, opposée à une surface de moulage 22, la surface interne 21 épousant le relief de la surface de moulage 22 ;
- la surface arrière 31 qui est en regard de la surface interne 21.

Tel que cela est illustré sur les médaillons de détail de la figure 2, le fond 1 de moule comprend une ouverture d'entrée 11 reliée à une source d'alimentation (no représentée) du fond 1 de moule en fluide caloporteur, et au moins une ouverture de sortie 12 ou d'évacuation reliée à une centrale qui aspire le fluide caloporteur provenant du fond 1 de moule.

Plus précisément, l'ouverture d'entrée 11 est située au centre du fond 1 de moule et forme un trou traversant la paroi externe 3 et le socle 5 du fond 1 de moule pour permettre l'entrée du fluide caloporteur dans la cavité 4. L'ouverture d'entrée 11 débouche ainsi directement dans la cavité 4.

La ou chaque ouverture de sortie 12 se situe autour de l'ouverture d'entrée 11 et forme également un trou traversant la paroi externe 3 et le socle 5 du fond 1 de moule pour permettre la sortie du fluide caloporteur hors de la cavité 4.

La ou chaque ouverture de sortie 12 est reliée à la cavité 4 au moyen d'au moins un collecteur 13 (visible en partie supérieure du fond de moule sur la figure 2). Plus particulièrement, le fond 1 de moule comprend quatre collecteurs 13, disposés de façon équidistante sur une zone circonférentielle de la partie supérieure. Chaque collecteur 13 débouche dans la cavité 4 par un passage 14 respectif situé dans une portion supérieure du fond 1 de moule. Chaque collecteur 13 forme ainsi une poche qui permet de récupérer le fluide caloporteur circulant dans la cavité 4 en plusieurs points du fond 1 de moule.

En référence à la figure 2, le fond de moule comprend en outre un maillage 6 de poteaux 61 s'étendant au moins sur une portion de la cavité 4 entre la surface interne 21 de la paroi de moulage 2 et la surface arrière 31 de la paroi externe 3.

Chaque poteau 61 forme, avec l'axe longitudinal A du fond 1 de moule, qui correspond à l'axe longitudinal du moule de fabrication des récipients et des récipients à former eux-mêmes, un angle a compris entre 0° et 45°. De préférence, l'anglea est égal ou quasiment égal à 0°, c'est-à-dire que les poteaux sont parallèles à cet axe.

L'axe longitudinal A des récipients à former est confondu avec un axe longitudinal du fond 1 de moule et donc du moule de fabrication des récipients. Aussi, les figures 1 et 2 ne représentent que l'axe longitudinal A du fond 1 de moule.

Toujours en référence à la figure 2, chaque poteau 61 est relié à la surface interne 21 de la paroi de moulage 2 par un premier évasement 62 de matière depuis le poteau vers la surface interne 21 de la paroi de moulage 2.

De même, chaque poteau 61 est relié à la surface arrière 31 de la paroi externe 3 du fond 1 de moule par un deuxième évasement 63 de matière depuis le poteau 61 vers la surface arrière 31 de la paroi externe 3 du fond 1 de moule.

Chaque premier évasement 62 de matière et deuxième évasement 63 de matière peut prendre la forme, au choix, d'un congé, d'un biseau ou d'un chanfrein.

Bien entendu, certains premiers évasements 62 de matière, et/ou deuxièmes évasements 63 de matière peuvent présenter une forme de congé tandis que d'autres ont une forme de chanfrein et que d'autres encore ont une forme de biseau.

La liaison du premier évasement 62 de matière avec la surface interne 21 de la paroi de moulage 2 définit une première section S1 qui présente un rapport avec une deuxième section S2 du poteau 61, ce rapport S1/S2 étant compris entre 10 et 15.

De préférence, le rapport est égal 12,5.

Selon un mode de réalisation préférentiel, la première section S1 présente une valeur de 5mm², et la deuxième section S2 présente une valeur de 0,4mm². La deuxième section S2 est mesurée entre les deux évasements 62, 63 de matière d'un même poteau, c'est-à-dire dans une portion sensiblement rectiligne du poteau 61, comme illustré par la figure 3.

En référence à la figure 4, les poteaux 61 du maillage 6 sont disposés le long de cercles C1, C2, C3, C4, etc., concentriques par rapport à l'axe longitudinal A du fond 1 de moule.

Plus précisément, comme cela est illustré sur la figure 4, les poteaux 61 d'un premier cercle C1 sont agencés en quinconce par rapport aux poteaux 61 d'un deuxième cercle C2 immédiatement adjacent. Autrement dit, lorsque l'on regarde depuis l'intérieur du fond 1 de moule, c'est-à-dire depuis l'axe longitudinal A du fond 1 de moule, vers l'extérieur du fond 1 de moule, entre deux poteaux 61 consécutifs du premier cercle C1 se situe un poteau 61 du deuxième cercle C2 concentrique immédiatement adjacent.

Comme on le voit sur la figure 4, chaque poteau 61 présente une section ovale dont la plus grande longueur s'étend selon une direction de la circulation du fluide caloporteur dans la cavité 4. Autrement dit, la plus grande longueur de chacun des poteaux 61 s'étend sur une direction sensiblement radiale entre l'axe longitudinal A du fond 1 de moule et l'extérieur du moule.

En référence à la figure 2, le maillage s'étend dans un diamètre compris entre 75% et 100% d'un diamètre d'assise des récipients à former. Toujours en référence à la figure 2, le diamètre d'assise des récipients à former est matérialisé par le point le plus bas selon l'axe longitudinal A du fond 1 de moule.

Autrement dit, le point le plus bas dans le fond de moule définit la profondeur maximale du moule.

De préférence, le maillage 6 s'étend dans un diamètre d'au moins 90% du diamètre d'assise des récipients à former.

A tout le moins, le maillage 6 s'étend préférentiellement et uniquement dans une portion de la cavité 4 formant un angle avec un plan de pose des récipients à former, cet angle étant inférieur à 45°.

Le plan de pose des récipients à former est défini par le diamètre d'assise des récipients à former.

Autrement dit, le plan de pose des récipients à former s'étend perpendiculairement à l'axe longitudinal A du fond 1 de moule et passe par le point le plus bas du fond 1 de moule.

Au-delà de cette portion, la cavité 4 comprend avantageusement des murs ou cloisons (non représentés sur les figures), s'étendant selon la direction de la circulation du fluide dans la cavité 4, c'est-à-dire de l'ouverture d'entrée 11 vers les passages 14.

Ces cloisons ou murs permettent de créer des canaux de circulation du fluide afin de guider le fluide caloporteur vers les ouvertures de sortie 12, et plus précisément vers les collecteurs 13, de sorte à évacuer le fluide caloporteur qui s'est réchauffé en circulant dans la cavité 4 comme expliqué ci-après.

De préférence, le maillage 6 de poteaux 61 comprend un nombre de poteaux 61 comprise entre 10 et 60 poteaux par cm².

Selon un mode de réalisation préféré, le fond 1 de moule est réalisé par un procédé de frittage à partir d'une poudre comprenant un mélange de chrome et de cobalt représentant au moins 80 % en masse de la poudre.

En fonctionnement, c'est-à-dire lorsque le fond de moule est monté dans une unité de formage pour la fabrication d'un récipient en matière plastique par étirage-soufflage, le fluide caloporteur est injecté dans le fond 1 de moule par l'ouverture d'entrée 11.

Le fluide caloporteur s'écoule (flèches en pointillés sur les figures 2 à 4) alors dans la cavité 4 et rejoint les ouvertures de sortie 12, via les passages 14 et les collecteurs 13. Lors de sa circulation dans la cavité 4, le fluide caloporteur vient au contact de la surface interne 21 de la paroi de moulage 2 qui s'échauffe par la pression du gaz et la venue à son contact de la matière plastique notamment.

Plus précisément, lorsqu'un récipient est soufflé, un gaz à haute pression (généralement de l'ordre de 40 bars), par exemple de l'air, est injecté dans une préforme en matière plastique, forçant la matière plastique à s'étirer pour former le récipient. La matière plastique s'étire de façon radiale et longitudinale pour atteindre la surface de moulage 22 de la paroi de moulage 2 du fond 1 de moule.

Lorsque la matière s'étire, de l'air contenu dans le moule se retrouve piégé entre la matière plastique et la paroi de moulage 2.

Afin d'éviter une surpression dans le moule et de permettre la venue de la matière plastique au contact de la surface de moulage 22, les parois du moule et le fond 1 de moule comportent des évents 7 (voir figure 1), c'est-à-dire des lumières traversant le fond 1 de moule pour mettre en communication fluidique et notamment d'air, l'intérieur du fond 1 de moule et l'extérieur du fond 1 de moule.

En d'autres termes, les évents 7 forment des canalisations traversant à la fois la paroi de moulage 2 et la paroi externe 3 du fond 1 de moule.

Bien entendu, il n'existe pas de communication fluidique entre les évents et la cavité 4 du fond 1 de moule.

Lors de sa circulation dans la cavité 4, le fluide caloporteur rencontre sur son passage les différents poteaux 61 du maillage 6.

L'agencement en quinconce des poteaux 61 selon des cercles C1, C2, C3, C4 concentriques permet de créer des turbulences dans la circulation du fluide caloporteur. Ces turbulences permettent un meilleur échange thermique entre la paroi de moulage 2 du fond 1 de moule et le fluide caloporteur, de sorte à permettre un meilleur refroidissement et un meilleur réchauffement du fluide caloporteur au contact de la paroi de moulage 2.

Outre le fluide caloporteur qui permet de refroidir le fond 1 de moule, le maillage 6 de poteaux 61 assure une complétude de refroidissement avec le fluide caloporteur.

En effet, la jonction entre la paroi de moulage 2 et la paroi externe 3 par les poteaux 61, permet qu'une partie des calories de la paroi de moulage 2 se dissipe dans les poteaux 61 puis la paroi externe 3, la paroi externe 3 étant refroidie par de l'air circulant dans l'unité de formage des récipients en matière plastique.

Plus particulièrement, l'air circulant dans l'unité de formage est un air ambiant à une température suffisamment inférieure à la température de la paroi de moulage 2, ce qui permet un échange thermique et donc un refroidissement supplémentaire de la paroi de moulage 2.

En outre, les premiers évasements 62 de matière permettent également d'assurer une bonne conductivité thermique entre la paroi de moulage 2 et les poteaux 61, de sorte que la majeure partie des calories est dissipée par le fluide caloporteur.

Parmi les avantages du fond 1 de moule selon l'invention, on peut citer :
- un meilleur refroidissement du fond 1 de moule comparativement aux fonds de moule de l'art antérieur ;
- une meilleure circulation du fluide caloporteur dans la cavité 4,
- une facilité de fabrication du fond 1 de moule.

L'amélioration du refroidissement du fond 1 de moule est assurée, comme décrit précédemment, par l'amélioration de la circulation du fluide caloporteur dans la cavité 4 et notamment par la génération de turbulences due à la présence des poteaux 61.

Par ailleurs, la présence des poteaux 61 permet, en plus du fluide caloporteur, de dissiper la chaleur par conductivité thermique jusqu'à la paroi externe 3 et la circulation de l'air ambiant dans l'unité de formage.

La fabrication additive d'un fond 1 de moule selon l'invention est facilitée par la présence des poteaux 61 qui réduisent les zones dites « de vide de matière », autrement dit les zones de la paroi de moulage 2 situées entre les poteaux 61.

Il en résulte que lors de la réalisation des différentes couches du fond 1 de moule par le procédé de frittage, le pourcentage de chaque couche ne reposant pas sur une surface solidifiée de matière d'une couche précédente est faible comparativement à la surface reposant sur de la matière d'une couche précédente.

Par ailleurs, le premier évasement 62 de matière entre les poteaux 61 et la paroi de moulage 2 permet de renforcer cette présence de matière dans les couches inférieures et donc d'augmenter la tenue mécanique du fond 1 de moule une fois fabriqué. Cela permet en outre de réduire l'épaisseur de la paroi de moulage 2 pour rendre le fond 1 de moule plus léger, et augmenter l'effet du fluide caloporteur puisque la réduction de l'épaisseur de la paroi de moulage 2 diminue son inertie thermique.

Enfin, la présence du premier évasement 62 de matière et du deuxième évasement 63 de matière, associée à la présence de poteaux, permet d'éviter le problème de surfusion. Ainsi, l'état de la surface interne 21 étant contrôlée, sa qualité est améliorée. Cette conception participe activement à l'amélioration des échanges thermiques entre la surface de moulage 22, la surface interne 21 et le fluide caloporteur.

## Revendications

1. Fond (1) de moule monobloc destiné à un moule pour la fabrication de récipients par soufflage ou étirage soufflage à partir de préformes en matière plastique, le fond (1) de moule comprenant :
- une paroi de moulage (2) ayant une surface de moulage (22) en relief à l'empreinte d'au moins une partie d'un fond de récipient,
- une cavité (4) destinée à recevoir un fluide caloporteur, incluse dans le fond (1) de moule, cette cavité (4) étant délimitée par une enveloppe surfacique intégralement définie par le fond (1) de moule et incluant d'une part une surface interne (21) de la paroi de moulage (2), opposée à la surface de moulage (22) et épousant le relief de celle-ci, d'autre part une surface arrière (31) en regard de la surface interne (21),
- au moins une ouverture d'entrée (11) et au moins une ouverture de sortie (12) pour la circulation du fluide caloporteur dans la cavité (4),
- un maillage (6) de poteaux (61) s'étendant sur au moins une portion de la cavité (4) entre la surface interne (21) de la paroi de moulage (2) et la surface arrière (31),
**caractérisé en ce que** chaque poteau (61) définit, avec un axe longitudinal (A) du fond (1) de moule, un angle (a) compris entre 0° et 45°et est relié à la surface interne (21) de la paroi de moulage (2) par un premier évasement (62) de matière depuis le poteau (61) vers la surface interne (21) de la paroi de moulage (2),
et **en ce qu'**une première section (S1) entre la liaison du premier évasement (62) de matière avec la surface interne (21) de la paroi de moulage (2) définit avec une deuxième section (S2) du poteau (61), avant le premier évasement (62) de matière, un rapport compris entre 10 et 15.

2. Fond (1) de moule selon la revendication 1, **caractérisé en ce que** les poteaux (61) sont disposés le long de cercles (C1, C2, C3, C4) concentriques par rapport à l'axe longitudinal (A) du fond (1) de moule.

3. Fond (1) de moule selon la revendication 2, **caractérisé en ce que** les poteaux (61) d'un premier cercle (C1) sont agencés en quinconce par rapport aux poteaux (61) un deuxième cercle (C2) immédiatement adjacent.

4. Fond (1) de moule selon l'une quelconque des revendications précédentes, **caractérisé en ce que** le maillage (6) s'étend dans un diamètre compris entre 75% et 100% d'un diamètre d'assise des récipients à former.

5. Fond (1) de moule selon l'une quelconque des revendications précédentes, **caractérisé en ce que** le maillage (6) s'étend uniquement dans une portion de la cavité (4) formant un angle, avec un plan de pose des récipients à former, inférieur à 45°.

6. Fond (1) de moule selon l'une quelconque des revendications précédentes, **caractérisé en ce qu'**il est réalisé par frittage à partir d'une poudre métallique.

7. Fond (1) de moule selon la revendication 6, **caractérisé en ce qu'**il est réalisé par frittage à partir d'une poudre comprenant un mélange de chrome et de cobalt représentant au moins 80 % en masse de la poudre.

8. Fond (1) de moule selon l'une quelconque des revendications précédentes, **caractérisé en ce que** le maillage (6) de poteaux (61) comprend une densité de poteaux (61) comprise entre 10 et 60 poteaux par cm².

9. Fond (1) de moule selon l'une quelconque des revendications précédentes, **caractérisé en ce que** les poteaux (61) présentent une section ovale, dont la plus grande longueur s'étend selon une direction de circulation du fluide caloporteur dans la cavité (4).

## Patentansprüche

1. Einteiliger Formboden (1), der für eine Form zur Herstellung von Behältern durch Blasen oder Streckblasen aus Vorformlingen aus Kunststoff bestimmt ist, wobei der Formboden (1) umfasst:
- eine Formungswand (2), die eine Formungsfläche (22) mit einem Relief entsprechend dem Abdruck mindestens eines Teils eines Behälterbodens aufweist,
- einen Hohlraum (4), der dazu bestimmt ist, ein Wärmeträgerfluid aufzunehmen und in dem Formboden (1) eingeschlossen ist, wobei dieser Hohlraum (4) durch eine flächige Hülle begrenzt wird, die vollständig durch den Formboden (1) definiert wird und zum einen eine Innenfläche (21) der Formungswand (2), die zur Formungsfläche (22) entgegengesetzt ist und an deren Relief angepasst ist, und zum anderen eine hintere Fläche (31), gegenüber der Innenfläche (21), beinhaltet,
- mindestens eine Einlassöffnung (11) und mindestens eine Auslassöffnung (12) für die Zirkulation des Wärmeträgerfluids in dem Hohlraum (4),
- ein Netz (6) aus Pfeilern (61), das sich über mindestens einen Abschnitt des Hohlraums (4) zwischen der Innenfläche (21) der Formungswand (2) und der hinteren Fläche (31) erstreckt,
**dadurch gekennzeichnet, dass** jeder Pfeiler (61) mit einer Längsachse (A) des Formbodens (1) einen Winkel (α) zwischen 0° und 45° bildet und mit der Innenfläche (21) der Formungswand (2) über eine erste Materialaufweitung (62) von dem Pfeiler (61) aus zur Innenfläche (21) der Formungswand (2) hin verbunden ist, und dass ein erster Querschnitt (S1) zwischen der Verbindung der ersten Materialaufweitung (62) mit der Innenfläche (21) der Formungswand (2) mit einem zweiten Querschnitt (S2) des Pfeilers (61), vor der ersten Materialaufweitung (62), ein Verhältnis zwischen 10 und 15 definiert.

2. Formboden (1) nach Anspruch 1, **dadurch gekennzeichnet, dass** die Pfeiler (61) entlang von Kreisen (C1, C2, C3, C4) angeordnet sind, die in Bezug auf die Längsachse (A) des Formbodens (1) konzentrisch sind.

3. Formboden (1) nach Anspruch 2, **dadurch gekennzeichnet, dass** die Pfeiler (61) eines ersten Kreises (C1) in Bezug auf die Pfeiler (61) eines unmittelbar benachbarten zweiten Kreises (C2) versetzt angeordnet sind.

4. Formboden (1) nach einem der vorhergehenden Ansprüche, **dadurch gekennzeichnet, dass** das Netz (6) sich in einem Durchmesser zwischen 75 % und 100 % eines Sitzflächendurchmessers der zu bildenden Behälter erstreckt.

5. Formboden (1) nach einem der vorhergehenden Ansprüche, **dadurch gekennzeichnet, dass** das Netz (6) sich nur in einem Abschnitt des Hohlraums (4) erstreckt, der mit einer Stellebene der zu bildenden Behälter einen Winkel von weniger als 45° bildet.

6. Formboden (1) nach einem der vorhergehenden Ansprüche, **dadurch gekennzeichnet, dass** er durch Sintern aus einem Metallpulver hergestellt ist.

7. Formboden (1) nach Anspruch 6, **dadurch gekennzeichnet, dass** er durch Sintern aus einem Pulver hergestellt ist, das ein Gemisch aus Chrom und Cobalt umfasst, das mindestens 80 % bezogen auf die Masse des Pulvers ausmacht.

8. Formboden (1) nach einem der vorhergehenden Ansprüche, **dadurch gekennzeichnet, dass** das Netz (6) aus Pfeilern (61) eine Pfeilerdichte (61) zwischen 10 und 60 Pfeiler je cm² umfasst.

9. Formboden (1) nach einem der vorhergehenden Ansprüche, **dadurch gekennzeichnet, dass** die Pfeiler (61) einen ovalen Querschnitt aufweisen, dessen größte Länge sich entlang einer Zirkulationsrichtung des Wärmeträgerfluids in dem Hohlraum (4) erstreckt.

## Claims

1. One-piece mould bottom (1) intended for a mould for manufacturing containers by blow moulding or stretch blow moulding from preforms made of plastics material, the mould bottom (1) comprising:
- a moulding wall (2) having a moulding surface (22) in relief having the imprint of at least part of a container bottom,
- a cavity (4) that is intended to receive a heat transfer fluid and is included in the mould bottom (1), this cavity (4) being delimited by a surface casing entirely defined by the mould bottom (1) and including, for the one part, an inner surface (21) of the moulding wall (2), opposite to the moulding surface (22) and closely following the relief thereof, and, for the other part, a back surface (31) facing the inner surface (21),
- at least one inlet opening (11) and at least one outlet opening (12) for the circulation of the heat transfer fluid in the cavity (4),
- a grid (6) of posts (61) extending over at least one portion of the cavity (4) between the inner surface (21) of the moulding wall (2) and the back surface (31), **characterized in that** each post (61) defines, with a longitudinal axis (A) of the mould bottom (1), an angle (a) of between 0° and 45° and is connected to the inner surface (21) of the moulding wall (2) by a first flare (62) of material from the post (61) towards the inner surface (21) of the moulding wall (2),
and **in that** a first cross section (Sl) between the connection of the first flare (62) of material with the inner surface (21) of the moulding wall (2) defines with a second cross section (S2) of the post (61), before the first flare (62) of material, a ratio of between 10 and 15.

2. Mould bottom (1) according to Claim 1, **characterized in that** the posts (61) are disposed along circles (C1, C2, C3, C4) that are concentric with respect to the longitudinal axis (A) of the mould bottom (1).

3. Mould bottom (1) according to Claim 2, **characterized in that** the posts (61) of a first circle (C1) have a staggered arrangement with respect to the posts (61) of a second, immediately adjacent circle (C2).

4. Mould bottom (1) according to any one of the preceding claims, **characterized in that** the grid (6) extends in a diameter of between 75% and 100% of a base diameter of the containers to be shaped.

5. Mould bottom (1) according to any one of the preceding claims, **characterized in that** the grid (6) extends solely in a portion of the cavity (4) forming an angle of less than 45° with a standing plane of the containers to be shaped.

6. Mould bottom (1) according to any one of the preceding claims, **characterized in that** it is made by sintering from a metal powder.

7. Mould bottom (1) according to Claim 6, **characterized in that** it is made by sintering from a powder comprising a mixture of chromium and cobalt representing at least 80% by mass of the powder.

8. Mould bottom (1) according to any one of the preceding claims, **characterized in that** the grid (6) of posts (61) comprises a density of posts (61) of between 10 and 60 posts per cm².

9. Mould bottom (1) according to any one of the preceding claims, **characterized in that** the posts (61) have an oval cross section, the greatest length of which extends in a direction of circulation of the heat transfer fluid in the cavity (4).
